# EUROPÄISCHE PATENTSCHRIFT

(11) **EP 2 655 005 B1**
(45) Veröffentlichungstag und Bekanntmachung des Hinweises auf die Patenterteilung: **15.10.2014**
(21) Anmeldenummer: 11804687.9
(22) Anmeldetag: 22.12.2011
(51) Int. Cl.: B23P 6/00, F01D 5/00

(54) **VERFAHREN ZUR INSTANDSETZUNG VON GASTURBINENKOMPONENTEN**
METHOD FOR REPAIRING GAS TURBINE COMPONENTS
PROCÉDÉ DE RÉPARATION DE COMPOSANTS D'UNE TURBINE À GAZ

(30) Priorität: 23.12.2010 DE 102010055775
(43) Veröffentlichungstag der Anmeldung: 30.10.2013
(73) Patentinhaber: Lufthansa Technik AG, 22335 Hamburg (DE)
(72) Erfinder: CZERNER, Stefan, 22767 Hamburg (DE); WERNER-SPATZ, Christian, 22177 Hamburg (DE); KRAFT, Jörn, 22926 Ahrensburg (DE); ULLRICH, Thiemo, 20253 Hamburg (DE)
(74) Vertreter: Glawe, Delfs, Moll
(86) Internationale Anmeldenummer: PCT/EP2011/073725
(87) Internationale Veröffentlichungsnummer: WO 2012/085172

(56) Entgegenhaltungen:
- EP-A2- 1 422 380
- DE-A1-102009 003 794
- US-A1- 2003 167 117
- US-A1- 2003 167 616

## Beschreibung

Die Erfindung betrifft ein Verfahren zur Reparatur von Gasturbinenkomponenten.

In der Luftfahrt ist es bekannt, als Antrieb für Flugzeuge Gasturbinen-Triebwerke einzusetzen. Ein solches Gasturbinen-Triebwerk kann als Strahltriebwerk oder Turboprop-Triebwerk ausgebildet sein. Beiden Triebwerkstypen ist gemein, dass sie einen Verdichter, eine Brennkammer und eine Turbine umfassen. Im Kompressor wird die in das Triebwerk eintretende Luft mithilfe von Kompressorschaufel verdichtet. In der Turbinenstufe wird der aus der Brennkammer austretende Massenstrom dazu genutzt, über Turbinenschaufeln eine Rotationsbewegung zu erzeugen und damit den Kompressor zu betreiben. Die Kompressorschaufeln und Turbinenschaufeln werden zusammenfassend als Gasturbinenschaufeln bezeichnet.

Während des Betriebes eines Gasturbinen-Triebwerks kann es zu Beschädigungen an einzelnen Gasturbinenschaufeln kommen. Diese Beschädigungen können insbesondere durch in das Triebwerk eingesaugte feste Partikel, wie bspw. Staub, Sand oder Hagel, verursacht werden. Wird eine Gasturbinenschaufel beschädigt, so kommt es zu einer Abweichung von der optimalen Umströmung der Gasturbinenschaufel. In der Folge nimmt der Wirkungsgrad der einzelnen Gasturbinenschaufeln, der Triebwerksstufe und in der Folge auch der des Gesamttriebwerkes ab.

Es ist bekannt, bei der Wartung eines Flugzeugtriebwerkes die einzelnen Gasturbinenschaufeln auf Beschädigungen hin zu überprüfen. Werden Beschädigungen festgestellt, so wird überprüft, ob diese Beschädigungen noch in einem vom Hersteller der Gasturbinenschaufeln bzw. des Triebwerkes vorgegebenen Toleranzbereichen in Bezug auf bauteilbezogene geometrische Größen, wie Passungssitze, Risse oder Schaufelsehnenlänge, liegen. Ist dies der Fall, so wird die Beschädigung durch Reparatur ausgebessert.

Die Reparatur geschieht üblicherweise durch sog. Blenden, wobei die beschädigte Stelle durch Schleifen geglättet und mit einem sanften Übergang zur umliegenden Kontur versehen wird. Tritt die Beschädigung im Bereich der Vorderkante der Gasturbinenschaufel auf, kommt es in der Regel zu einer manuellen Nachbearbeitung der Schaufelvorderkante, wo durch Schleifen eine geglättete Kontur hergestellt wird. Eine Gesamtbetrachtung der Gasturbinenschaufel findet nicht statt.

Ist eine Reparatur einer Gasturbinenschaufel aufgrund Unterschreitung der zulässigen Toleranzen nicht möglich, so wird gemäß dem Stand der Technik die Gasturbinenschaufel verschrottet und durch eine neuwertige Gasturbinenschaufel ersetzt. Alternativ zur Verschrottung ist es auch möglich, dass die nicht reparaturfähige Gasturbinenschaufel generalüberholt wird. In diesem Fall wird Material auf die Gasturbinenschaufel aufgetragen, z. B. durch Aufschweißen, um anschließend durch spanende Bearbeitung eine Kontur innerhalb der vom Hersteller vorgegebenen Toleranzbereiche für eine Reparatur zu erreichen.

Auch die anderen Gasturbinenkomponenten, bspw. Komponenten der Brennkammer, können während des Betriebes beschädigt werden, was ebenfalls eine Verringerung des Wirkungsgrades des Gesamttriebwerkes nach sich zieht. Bei der Wartung werden auch diese Komponenten überprüft und, wenn möglich, repariert oder durch ein Neuteil ersetzt.

Im Stand der Technik wird die Frage, ob eine Gasturbinenkomponente repariert oder ersetzt werden soll, allein auf Grundlage der Reparaturfähigkeit, d. h. des Einhaltens von vorgegebenen Toleranzen, bewertet. Diese Bewertung ist im Prinzip alleinig eine wirtschaftliche Entscheidung betreffend die Instandsetzung, da die Reparatur grundsätzlich günstiger ist als die Neuanschaffung. Ob eine Gasturbinenkomponente durch ein fabrikneues Ersatzteil oder eine generalüberholte Gasturbinenkomponente ausgetauscht wird, ist allein eine Kostenfrage.

Ein Reparaturverfahren, bei dem die Auswirkung einer Reparatur auf eine Gasturbine vorab auf Grundlage von Erfahrungswerten abgeschätzt wird, wobei bei Überschreitung eines vorgegebenen Schwellenwertes ein Ingenieur zur Bewilligung der Reparatur heranzuziehen ist, ist aus der EP 1 422 380 bekannt.

Der Erfindung liegt die Aufgabe zugrunde, ein verbessertes Verfahren zur Reparatur von Gasturbinenkomponenten zu schaffen.

Diese Aufgabe wird gelöst durch ein Verfahren gemäß dem Hauptanspruch. Vorteilhafte Weiterbildungen ergeben sich aus den abhängigen Ansprüchen.

Demnach betrifft die Erfindung ein Verfahren zur Instandsetzung von Gasturbinenkomponenten umfassend die Schritte:
a) Überprüfen der Reparaturfähigkeit einer Gasturbinenkomponente;
b) bei festgestellter Reparaturfähigkeit: Berechnung wenigstens einer möglichen Formgebung der Gasturbinenkomponente nach einer Reparatur;
c) Durchführung wenigstens einer Kreisprozessanalyse eines gesamten Triebwerks mit der wenigstens einen möglichen Formgebung der Gasturbinenkomponente nach einer Reparatur;
d) Vergleich der Ergebnisse der wenigstens einen Kreisprozessanalyse eines Gesamttriebwerks mit einer reparierten Gasturbinenkomponente und dem Ergebnis einer Kreisprozessanalyse des Gesamttriebwerks mit neuwertiger Gasturbinenkomponente; und
e) abhängig vom Ausgang des Vergleichs: Reparatur der Gasturbinenkomponente gemäß der Reparatur, die der Berechnung der Formgebung für die Kreisprozessanalyse zugrunde lag, oder Ersatz der Gasturbinenkomponente durch eine neuwertige Gasturbinenkomponente.

Die Erfindung hat erkannt, dass es nachteilig ist, dass der Ersatz einer beschädigten Gasturbinenkomponente durch ein Neuteil wie im Stand der Technik nur dann stattfindet, wenn die Gasturbinenkomponente nicht mehr reparaturfähig ist, die Entscheidung also allein aufgrund von wirtschaftlichen Überlegungen betreffend die Instandsetzung getroffen wird.

Vielmehr ist es vorteilhaft, wenn die technischen Auswirkungen einer reparierten Gasturbinenkomponente auf das gesamte Triebwerk untersucht werden, insbesondere im Vergleich zu dem Gesamttriebwerk mit einem fabrikneuen Ersatzteil für diese Gasturbinenkomponente. Für diese Bewertung kann insbesondere der Wirkungsgrad des Gesamttriebwerkes als Entscheidungsfaktor herangezogen werden. Aber auch aus dem Wirkungsgrad ableitbare Faktoren, wie Kraftstoffverbrauch und/oder Schadstoffausstoß können herangezogen werden. Faktoren wie Betriebskosten des Gesamttriebwerks mit reparierter oder fabrikneuer Gasturbinenkomponente, Reparaturkosten, Ausfallzeiten und Neuanschaffungskosten können ebenfalls berücksichtigt werden.

Die genannten Faktoren zur Abwägung zwischen Reparatur und Ersatz durch eine neuwertige Gasturbinenkomponente beschränken sich also nicht nur auf die Reparaturmöglichkeit der Gasturbinenkomponente, sondern berücksichtigen auch die Auswirkungen auf den Betrieb nach erfolgter Reparatur im Vergleich zu einem Austausch der Gasturbinenkomponente. So kann sich z. B. in dem erfindungsgemäßen Verfahren herausstellen, dass die Reparatur einer grundsätzlich reparaturfähigen Gasturbinenkomponente aufgrund eines übermäßigen Wirkungsgradverlustes gegenüber einer fabrikneuen Gasturbinenkomponente im Hinblick auf den an die Instandsetzung anschließenden Betrieb nachteilig ist.

Erfindungsgemäß ist vorgesehen, dass zunächst die Reparaturfähigkeit einer Gasturbinenkomponente überprüft wird. Dies kann dadurch geschehen, dass die zu reparierende Gasturbinenkomponente vermessen wird und die durch die Vermessung gewonnenen Daten daraufhin überprüft werden, ob die von dem Triebwerkshersteller vorgegebenen Toleranzbereiche eingehalten werden. Es wird also ein Vergleich der gewonnenen Vermessungsdaten mit den Herstellervorgaben durchgeführt. Die in der Vermessung gewonnenen Daten, in der Regel eine Punktwolke, können durch bekannte Verfahren in CADlesbare Formate umgewandelt werden.

Wird festgestellt, dass die Gasturbinenkomponente reparaturfähig ist, d. h. die Vermessungsdaten in dem von dem Hersteller vorgegebenen Toleranzbereich liegen, wird ausgehend von den Vermessungsdaten wenigstens eine mögliche Formgebung der Gasturbinenkomponente nach einer Reparatur berechnet. Es wird also simuliert, welche Form die Gasturbinenkomponente nach einer möglichen Reparatur hätte. Zur Simulation stehen die verschiedensten Reparaturmöglichkeiten zur Verfügung, u. a. eine spanende Nachbearbeitung, bspw. durch Blenden, aber auch eine Nicht-Bearbeitung, d. h., eventuelle Beschädigungen an der Gasturbinenkomponente bleiben unverändert bestehen. Es ist auch möglich, dass die Formgebung für jeweils verschiedene Reparaturmöglichkeiten berechnet wird. In einem solchen Fall stehen dann nicht nur eine mögliche Formgebung der Gasturbinenkomponente nach einer Reparatur zur Verfügung, sondern mehrere Verschiedene.

Anschließend wird mit jeder im vorangegangenen Schritt berechneten Formgebung eine Kreisprozessanalyse eines Gesamttriebwerks, in der die Gasturbinenkomponente zum Einsatz kommen soll, durchgeführt. Durch eine solche Kreisprozessanalyse lassen sich die Auswirkungen einer Reparatur für den späteren Betrieb abschätzen. So können bspw. der Wirkungsgrad, der Kraftstoffverbrauch und/oder Schadstoffausstoß eines Gesamttriebwerks mit einer reparierten Gasturbinenkomponente entsprechend der berechneten Formgebung simuliert werden. Daraus lassen sich wiederum die Betriebskosten ableiten, denen ggf. die für die Reparatur vermutlich anfallenden Kosten zugeschlagen werden können. Die Kreisprozessanalyse kann bspw. unter Zuhilfenahme einer CFD-Analyse durchgeführt werden, in der die Strömung um oder durch die fragliche Gasturbinenkomponente simuliert wird. Entsprechend lassen sich andere numerische Methoden für bestimmte physikalische Vorgänge in dem Gesamttriebwerk, z. B. Thermodynamik, einbinden.

In einem nächsten Schritt werden die Ergebnisse der einzelnen im vorherigen Schritt berechneten Kreisprozesse mit dem Ergebnis einer Kreisprozessanalyse des Gesamttriebwerks mit neuwertiger Gasturbinenkomponente verglichen. Dazu können verschiedene technische Faktoren wie Wirkungsgrad, Kraftstoffverbrauch und/oder Schadstoffausstoß verglichen werden, wobei der Schadstoffausstoß noch in Ausstoß von CO₂-, NOₓ-, CₓHₓ-, Schwefelverbindungen und Ruß aufgegliedert werden kann. Es ist aber auch möglich, aus den genannten Werten abgeleitete Werte wie Betriebskosten etc. miteinander zu vergleichen. Werden den Betriebskosten einer reparierten Gasturbinenkomponente für den Vergleich die Reparaturkosten aufgeschlagen, so sind vorzugsweise entsprechend die Neuanschaffungskosten für eine fabrikneue Gasturbinenkomponente zu berücksichtigen.

Durch den Vergleich lässt sich aus den vorliegenden Ergebnissen der Kreisprozessanalysen das beste Ergebnis herausfiltern. Abhängig von diesem Ergebnis wird dann die Gasturbinenkomponente gemäß der Reparatur instand gesetzt, die der Berechnung der Formgebung für diejenige Kreisprozessanalyse zugrunde lag, die in den Vergleich letztendlich ausgewählt wurde. Alternativ wird die Gasturbinenkomponente durch eine neuwertige Gasturbinenkomponente ersetzt. Erfindungsgemäß ist also vorgesehen, nicht lediglich die reine Reparaturfähigkeit einer Gasturbinenkomponente für die Entscheidung für oder gegen eine Reparatur zugrunde zu legen, sondern vor Durchführung der tatsächlichen Reparatur der Gasturbinenkomponente die Auswirkungen einer Reparatur (oder mehrere Reparaturmöglichkeiten) zu simulieren und mit dem Fall des Ersatzes der Gasturbinenkomponente durch ein Neuteil zu vergleichen. Bei einem entsprechenden Vergleich können Wirkungsgrad, Kraftstoffverbrauch und/oder Schadstoffausstoß, aber auch daraus abgeleitete Werte, wie Betriebskosten, herangezogen werden. Es wird also nicht nur auf die Kosten einer Reparatur gegenüber einer Neuanschaffung abgestellt (wobei eine Reparatur, sofern möglich, grundsätzlich günstiger ist als eine Neuanschaffung), sondern es werden die längerfristigen Auswirkungen einer Reparatur bzw. Neuanschaffung simuliert und berücksichtigt.

"Beschädigung" im Zusammenhang mit der Erfindung umfasst jeden erwartbaren oder unerwartbaren Schaden, der während des Betriebs des Gesamttriebwerks an einer Gasturbinenkomponente auftreten kann. Dazu gehören Schäden aufgrund von Verschleiß, ebenso wie Schäden aufgrund besonderer Ereignisse, wie z. B. Vogelschlag.

"Instandsetzung" im Sinne der Erfindung bedeutet, dass eine beschädigte Gasturbinenkomponente nach einer Instandsetzung wieder in ein Gasturbinentriebwerk eingesetzt werden kann. Der Begriff Instandsetzung umfasst als Oberbegriff die Reparatur, die Generalüberholung und den Ersatz einer Gasturbinenkomponente durch ein Neuteil.

"Reparatur" im Sinne dieser Erfindung bedeutet, dass eine Gasturbinenkomponente mit bekannten Reparaturverfahren bearbeitet wird, um Beschädigungen und/oder deren Auswirkungen zu beseitigen und/oder abzuschwächen. Handelt es sich bei der Gasturbinenkomponente um eine Gasturbinenschaufel, kann eine Reparatur bspw. in einer spanenden Bearbeitung liegen, bei der die Gasturbinenschaufel durch Schleifen und/oder Fräsen in eine neue Kontur überführt wird. Die Reparatur kann dabei das sogenannte Blenden, bei dem Beschädigung an der Oberfläche einer Gasturbinenschaufel beigeschliffen werden, umfassen, ebenso wie das Nachbearbeiten der Eintrittskante einer Gasturbinenschaufel durch Fräsen. Letztlich ist durch den Begriff der Reparatur auch die Nicht-Bearbeitung der Gasturbinenkomponente umfasst. Es ist nämlich durchaus möglich, dass einige Gasturbinenkomponenten trotz Beschädigung im nicht-reparierten Zustand bei der Kreisprozessanalyse besser abschneiden als reparierte Gasturbinenkomponenten, bei der die Beschädigung während der Reparatur bearbeitet wurde.

Der Begriff "Generalüberholung" umfasst solche Maßnahmen, bei denen beschädigte Gasturbinenkomponenten strukturell erneuert werden. So kann bspw. neues Material aufgetragen werden, bei Gasturbinenschaufeln insbesondere durch Aufschweißen. Die Gasturbinenschaufel wird dann und in einem zweiten Verfahrensschritt neu profiliert. Grundsätzlich ist es möglich, durch eine Generalüberholung mit einem Neuteil vergleichbare Eigenschaften einer Gasturbinenkomponente zu erreichen. In der Regel wird durch eine Generalüberholung jedoch lediglich eine Formgebung erreicht, welche in dem Toleranzbereich gemäß den Herstellerangaben liegt, jedoch nicht die gleiche Effizienz wie ein Neuteil erreicht.

"Formgebung" bedeutet die äußere und/oder innere Geometrie einer Gasturbinenkomponente. Neben oder anstelle der Geometrie einer Gasturbinenkomponente kann darunter bspw. aber auch die Oberflächenbeschaffenheit oder sonstige für den Wirkungsgrad des Gesamttriebwerks relevanten und durch Messverfahren prüfbare Eigenschaften verstanden werden. "Vermessung" bzw. "Vermessungsdaten" beschränkt sich sinngemäß auch nicht zwingend nur auf die Ermittlung bzw. Abbildung von der Geometrie einer Gasturbinenkomponente, sondern umfasst ggf. auch andere Messverfahren zur Ermittlung der vorgenannten Eigenschaften.

Es ist bevorzugt, wenn bei festgestellter mangelnder Reparaturfähigkeit einer Gasturbinenkomponente eine Kreisprozessanalyse eines Gesamttriebwerks mit der Gasturbinenkomponente nach Generalüberholung durchgeführt wird, das Ergebnis der Kreisprozessanalyse des Gesamttriebwerkes mit generalüberholter Gasturbinenkomponente mit den Ergebnissen einer Kreisprozessanalyse des Gesamttriebwerks mit neuwertiger Gasturbinenkomponente verglichen wird, und je nach Ergebnis des Vergleichs die Gasturbinenkomponente generalüberholt oder durch eine neuwertige Gasturbinenkomponente ersetzt wird. Durch eine entsprechende Ausgestaltung des Verfahrens wird sichergestellt, dass vor einer Generalüberholung einer Gasturbinenkomponente die Auswirkungen der Generalüberholung auf das Gesamttriebwerk im Vergleich zu einem Ersatz mit einer neuwertigen Gasturbinenkomponente verglichen werden. Ähnlich wie bei dem oben beschriebenen Vergleich zwischen reparierter und neuwertiger Gasturbinenkomponente können der Wirkungsgrad des Gesamttriebwerks, der Kraftstoffverbrauch und/oder der Schadstoffausstoß berücksichtigt werden. Ebenso gilt dies für die darauf abgeleiteten Werte, wie die für den zu erwartenden Betrieb des Gesamttriebwerks anfallenden Betriebskosten. Bei den Betriebskosten können darüber hinaus noch die Ausfallzeiten aufgrund der Instandsetzung und die Kosten für die Generalüberholung bzw. das fabrikneue Austauschteil berücksichtigt werden.

Die möglichen Parameter für den Vergleich der Ergebnisse der Kreisprozessanalysen (Wirkungsgrad, Kraftstoffverbrauch und/oder Schadstoffausstoß für den Betrieb eines Gesamttriebwerks, Betriebskosten, Reparaturkosten, Kosten für Generalüberholung, Neuanschaffungskosten und/oder Ausfallzeiten) sind für den Vergleich zweier oder mehrerer Kreisprozessanalysen bevorzugt gewichtet.

Es ist bevorzugt, wenn die Überprüfung der Reparaturfähigkeit durch Vermessung der Gasturbinenkomponente und Vergleich der Vermessungsdaten mit Herstellervorgaben erreicht wird.

Für die Kreisprozessanalyse ist es bevorzugt, wenn die durch die Gasturbinenkomponente beeinflusste Strömung und/oder durch die Belastung an der Gasturbinenkomponente auftretenden Verformungen berücksichtigt werden. Es kann also eine Fluid-Struktur-Interaktion in die Kreisprozessanalyse einfließen, die das Ergebnis aufgrund besserer Voraussage bspw. der zukünftigen Betriebskosten zuverlässiger macht. Die Fluid-Struktur-Rechnung kann bei entsprechenden, zu untersuchenden Gasturbinenkomponenten bspw. eine Vollkranzrechnung sein.

Bei der instand zu setzenden Gasturbinenkomponente handelt es sich bevorzugt um eine Gasturbinenschaufel.

Die Erfindung wird nun anhand einer vorteilhaften Ausführungsform unter Bezugnahme auf die beigefügte Zeichnung beispielhaft beschrieben. Es zeigt:

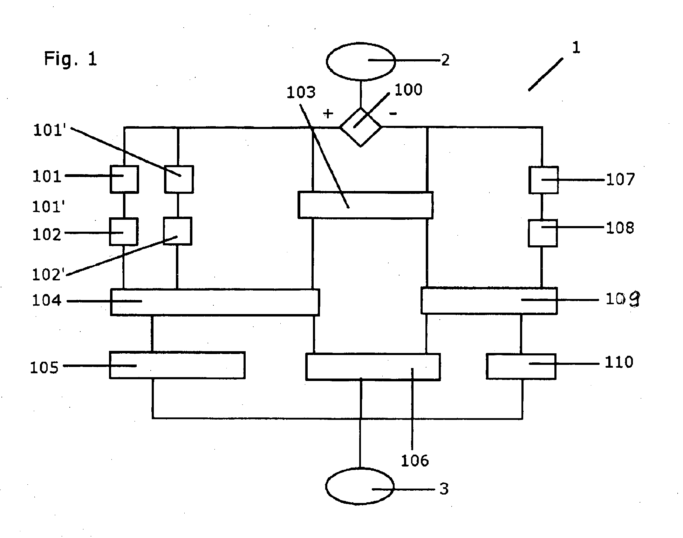

- Fig. 1: Eine schematische Darstellung des erfindungsgemäßen Verfahrens zur Instandhaltung von Gasturbinenkomponente.

Zu Beginn des Verfahrens 1 zur Instandsetzung von Gasturbinenkomponente liegt eine im Betrieb erodierte oder beschädigte Gasturbinenkomponente vor (Schritt 2). Die Erosion oder Beschädigung der Gasturbinenkomponente kann im Falle einer Gasturbinenschaufel bspw. durch im Betrieb durch das Triebwerk, in dem die Gasturbinenschaufel eingesetzt wurde, angesaugte Partikel, wie z. B. Hagel, Staub, Sand oder Steine, verursacht worden sein. Durch den Einschlag entsprechender Partikel auf der Gasturbinenschaufel können Verformungen in der Oberfläche auftreten, die die Umströmung der Gasturbinenschaufel beeinträchtigen.

In einem ersten Schritt 100 wird überprüft, ob die Gasturbinenkomponente reparaturfähig ist. Dazu wird die Gasturbinenkomponente vermessen und die so gewonnenen Vermessungsdaten mit den Herstellervorgaben verglichen. Insbesondere wird überprüft, ob die Vermessungsdaten im durch den Hersteller vorgegebenen Toleranzbereich für eine Gasturbinenkomponente liegen. Die Vermessung kann sich auf charakteristische Maße der Gasturbinenkomponente beschränken, wie z. B. bei Gasturbinenschaufel der Sehnenlänge. Es ist aber auch möglich, dass die Gasturbinenkomponente in ihrer gesamten Geometrie als Punktwolke erfasst wird, die Punktwolke auf bekannte Art und Weise zu CAD-lesbaren Formen umgewandelt und dann mit der Ursprungsform der Gasturbinenkomponente verglichen wird. Es kann so detailliert festgestellt werden, ob die Gasturbinenkomponente über ihre gesamte Oberfläche innerhalb des vorgegebenen Toleranzbereiches liegt.

Wird in Schritt 100 festgestellt, dass die Gasturbinenkomponente reparaturfähig ist, wird in den Schritten 101 und 101' jeweils eine mögliche Formgebung der Gasturbinenkomponente nach einer Reparatur berechnet. Es wird also simuliert, welche Formgebung die Gasturbinenkomponente nach einer erfolgten Reparatur voraussichtlich haben wird. In Schritt 101 wird berechnet, welche Formgebung die Gasturbinenkomponente aufweist, wenn alle Beschädigungen beseitigt werden, im Falle von Gasturbinenschaufeln bspw. durch Blenden. In Schritt 101' wird die Formgebung der Gasturbinenkomponente berechnet, wenn nur ein Teil der Beschädigungen bearbeitet werden. Bei Gasturbinenschaufeln könnten so bspw. die Beschädigungen auf der Profilfläche der Gasturbinenschaufel unbearbeitet bleiben und lediglich die Eintrittskante der Gasturbinenschaufel wird durch Fräsen nachgearbeitet.

Anschließend wird in den Schritten 102 und 102' ausgehend von den in den Schritten 101 und 101' berechneten Formgebungen jeweils eine Kreisprozessanalyse mit den berechneten Formgebungen durchgeführt. Bei dieser Kreisprozessanalyse wird der Wirkungsgrad des Gesamttriebwerkes, in dem eine Gasturbinenkomponente gemäß der berechneten Formgebung eingesetzt wird, berechnet. Die Kreisprozessanalyse 102, 102' basiert auf bekannten Methoden, nämlich einer CFD-Analyse, wobei auch die an der Gasturbinenkomponente auftretenden Verformungen aufgrund der Strömung berechnet und berücksichtigt werden. Die Fluid-Struktur-Interaktion zwischen der Gasturbinenkomponente und der durch ein Triebwerk strömenden Luft wird bei der Kreisprozessanalyse also berücksichtigt.

Parallel zu den Schritten 101, 101', 102, 102' wird noch eine Kreisprozessanalyse 103 durchgeführt, bei der die beschädigte Gasturbinenkomponente 2 durch ein Neuteil ersetzt wurde. Die Kreisprozessanalyse 103, die analog zu den Kreisprozessanalysen 102 und 102' durchgeführt wird, liefert also den Wirkungsgrad eines Gesamttriebwerkes, bei dem eine beschädigte Gasturbinenkomponente durch ein Neuteil ersetzt werden würde. Alternativ zur Durchführung der Kreisprozessanalyse 103 ist es auch möglich, dass der Wirkungsgrad eines Gesamttriebwerkes mit fabrikneuer Gasturbinenkomponente aus einer Datenbank (nicht dargestellt) bezogen wird.

In einem anschließenden Schritt 104 werden die Ergebnisse der Kreisprozessanalysen 102, 102' und 103 miteinander verglichen. Der Vergleich kann sich dabei allein auf die ermittelten Wirkungsgrade beschränken. Es ist aber auch möglich, dass von dem Wirkungsgrad abhängige Größen wie Kraftstoffverbrauch und/oder Schadstoffausstoß sowie ableitbare Größen wie Betriebskosten für ein gesamtes Triebwerk mit entsprechender Gasturbinenkomponente berücksichtigt werden. Wird auf die Betriebskosten abgestellt, so lassen sich auch die Reparatur- bzw. Neuanschaffungskosten einer Gasturbinenkomponente berücksichtigen. Im Schritt 104 wird entschieden, ob die Gasturbinenkomponente repariert oder durch ein Neuteil ersetzt werden soll.

Wird in Schritt 104 entschieden, dass die Gasturbinenkomponente repariert werden soll, wird die Reparatur in Schritt 105 durchgeführt. Dabei wird die Gasturbinenkomponente so repariert, dass die Formgebung, wie sie in Schritten 101 bzw. 101' berechnet wurde und der im Schritt 104 ausgewählten Kreisprozessanalyse 102 bzw. 102' zugrunde lag, erreicht wird. Die Gasturbinenkomponente wird im Schritt 105 also so repariert, dass sie eine Formgebung erhält, die in Schritten 101-104 als am vorteilhaftesten ermittelt wurden.

Wird in Schritt 104 festgestellt, dass eine Reparatur gemäß Schritt 105 nicht lohnenswert ist, wird die Gasturbinenkomponente in Schritt 106 durch ein Neuteil ersetzt.

Die durch Reparatur (Schritt 105) oder Austausch mit einem Neuteil (Schritt 106) instand gesetzte Gasturbinenkomponente kann anschließend wieder in ein Triebwerk eingebaut und betrieben werden (Schritt 3).

Wird in Schritt 100 festgestellt, dass eine beschädigte Gasturbinenkomponente nicht mehr repariert werden kann, wird in Schritt 107 die Formgebung der Gasturbinenkomponente nach einer Generalüberholung berechnet. Generalüberholung bedeutet, dass bspw. im Falle einer Gasturbinenschaufel auf diese Material, bspw. durch Aufschweißen, aufgebracht wird und die so bearbeitete Gasturbinenschaufel anschließend durch spanende Bearbeitung eine Profilkontur erhält. Die Berechnung der Formgebung einer Gasturbinenkomponente nach Generalüberholung gemäß Schritt 107 ist vergleichbar mit der berechneten Formgebung einer Gasturbinenkomponente bei Reparatur (vgl. Schritte 101, 101'). Anschließend wird auf Basis der berechneten Formgebung eine Kreisprozessanalyse durchgeführt, um so den Wirkungsgrad eines Gesamttriebwerkes und einer generalüberholten Gasturbinenkomponente entsprechend der in Schritt 107 berechneten Formgebung zu ermitteln (Schritt 108).

Parallel dazu wird eine Kreisprozessanalyse eines Gesamttriebwerkes mit fabrikneuer Gasturbinenkomponente durchgeführt (Schritt 103; vgl. dazu auch obige Ausführungen).

Anschließend werden in Schritt 109 die Ergebnisse der Kreisprozessanalysen 103 und 108 miteinander verglichen, wobei die gleichen Maßstäbe wie bei dem Vergleich 104 (vgl. obige Ausführungen) gelten. Ergebnis des Vergleiches 109 ist die Entscheidung, ob die Gasturbinenkomponente generalüberholt (Schritt 110) oder ob die Gasturbinenkomponente durch ein Neuteil ersetzt werden soll (Schritt 106). Die durch Generalüberholung oder durch Austausch mit einem Neuteil instand gesetzte Gasturbinenkomponente kann dann wieder in einem Triebwerk eingesetzt werden (Schritt 3).

## Patentansprüche

1. Verfahren (1) zur Instandsetzung von Gasturbinenkomponente umfassend die Schritte:
a) Überprüfen der Reparaturfähigkeit einer Gasturbinenkomponente (100);
b) bei festgestellter Reparaturfähigkeit: Berechnung wenigstens einer möglichen Formgebung der Gasturbinenkomponente nach einer Reparatur (101, 101');
c) Durchführung wenigstens einer Kreisprozessanalyse eines gesamten Triebwerkes mit der wenigstens einen möglichen Formgebung der Gasturbinenkomponente nach einer Reparatur (102, 102');
d) Vergleich (104) der Ergebnisse der wenigstens einer Kreisprozessanalyse eines Gesamttriebwerkes und einer reparierten Gasturbinenkomponente (102, 102') und dem Ergebnis einer Kreisprozessanalyse des Gesamttriebwerkes mit neuwertiger Gasturbinenkomponente (103); und
e) abhängig vom Ausgang des Vergleichs (104): Reparatur der Gasturbinenkomponente (105) gemäß der Reparatur, die der Berechnung der Formgebung für die Kreisprozessanalyse (102, 102') zugrunde lag, oder Ersatz der Gasturbinenkomponente durch eine neuwertige Gasturbinenkomponente (106).

2. Verfahren nach Anspruch 1, **dadurch gekennzeichnet, dass** bei festgestellter mangelnder Reparaturfähigkeit einer Gasturbinenkomponente (100) eine Kreisprozessanalyse eines Gesamttriebwerkes mit der Gasturbinenkomponente nach Generalüberholung durchgeführt wird (107, 108), das Ergebnis der Kreisprozessanalyse des Gesamttriebwerkes mit generalüberholter Gasturbinenkomponente (108) mit den Ergebnissen einer Kreisprozessanalyse des Gesamttriebwerkes mit neuwertiger Gasturbinenkomponente (103) verglichen wird, und je nach Ergebnis des Vergleichs der Gasturbinenkomponente generalüberholt (110) oder durch eine neuwertige Gasturbinenkomponente ersetzt wird (106).

3. Verfahren nach einem der vorhergehenden Ansprüche, **dadurch gekennzeichnet, dass** für den Vergleich der Ergebnisse von Kreisprozessanalyse als Parameter der Wirkungsgrad, der Kerosinverbrauch, der Schadstoffausstoß, Betriebskosten, Ausfallzeiten, Reparaturkosten, Generalüberholungskosten und/oder Neuanschaffungskosten herangezogen werden, wobei die einzelnen Parameter vorzugsweise gewichtet sind.

4. Verfahren nach einem der vorhergehenden Ansprüche, **dadurch gekennzeichnet, dass** die Überprüfung der Reparaturfähigkeit (100) durch Vermessung der Gasturbinenkomponente und Vergleich der Vermessungsdaten mit Herstellervorgaben durchgeführt wird.

5. Verfahren nach einem der vorhergehenden Ansprüche, **dadurch gekennzeichnet, dass** die Reparatur die Nicht-Bearbeitung und/oder spanende Nachbearbeitung, vorzugsweise durch Blenden, umfasst.

6. Verfahren nach einem der vorhergehenden Ansprüche, **dadurch gekennzeichnet, dass** bei der Kreisprozessanalyse eines Gesamttriebwerkes die durch die Gasturbinenkomponente beeinflusste Strömung und/oder die durch die Belastung an der Gasturbinenkomponente auftretende Verformungen berücksichtigt werden.

7. Verfahren nach einem der vorhergehenden Ansprüche, **dadurch gekennzeichnet, dass** die Gasturbinenkomponente eine Gasturbinenschaufel ist.

## Claims

1. Method (1) of reconditioning a gas turbine component, said method comprising the following steps:
a) checking the reparability of a gas turbine component (100);
b) if reparability is established: calculation of at least one possible shape for the gas turbine component after a repair (101, 101');
c) carrying out at least one cyclical process analysis of a complete engine with the at least one possible shape for the gas turbine component after a repair (102, 102');
d) comparison (104) of the results of the at least one cyclical process analysis of a complete engine and of a repaired gas turbine component (102, 102') and the result of a cyclical process analysis of the complete engine with an as-new gas turbine component (103); and
e) depending upon the outcome of the comparison (104): repair of the gas turbine component (105) in accordance with the repair on which the calculation of the shape for the cyclical process analysis (102, 102') was based, or replacement of the gas turbine component by an as-new gas turbine component (106).

2. Method according to Claim 1, **characterised in that**, if reparability of a gas turbine component (100) is found to be lacking, a cyclical process analysis of a complete engine with the gas turbine component after a general overhaul is carried out (107, 108), the result of the cyclical process analysis of the complete engine with a gas turbine component which has been subjected to a general overhaul (108) is compared with the results of a cyclical process analysis of the complete engine with an as-new gas turbine component (103) and, depending upon the result of the comparison, the gas turbine component is subjected to a general overhaul (110) or is replaced by an as-new gas turbine component (106).

3. Method according to one of the preceding claims, **characterised in that** the efficiency, kerosene consumption, pollutant output, operating costs, downtimes, repair costs, costs of a general overhaul and/or replacement costs are used as parameters for comparing the results of cyclical process analysis, the individual parameters preferably being weighted.

4. Method according to one of the preceding claims, **characterised in that** the checking of the reparability (100) is carried out by measuring the gas turbine component and comparing the measurement data with manufacturer's specifications.

5. Method according to one of the preceding claims, **characterised in that** the repair comprises non-machining and/or cutting-type post-machining, preferably by masking.

6. Method according to one of the preceding claims, **characterised in that** the flow which is influenced by the gas turbine component and/or the deformations which occur because of the loading on said gas turbine component are taken into account in the cyclical process analysis of a complete engine.

7. Method according to one of the preceding claims, **characterised in that** the gas turbine component is a gas turbine blade.

## Revendications

1. Procédé (1) permettant la réparation des composants d'une turbine à gaz, comportant les étapes :
a) examen de la capacité de réparation d'un composant (100) de la turbine à gaz ;
b) lorsque la capacité de réparation est établie : calcul d'au moins un formage possible du composant de la turbine à gaz à la suite d'une réparation (101, 101') ;
c) mise en oeuvre d'au moins une analyse d'un cycle de l'ensemble du groupe motopropulseur avec ledit au moins un formage du composant de la turbine à gaz à la suite d'une réparation (102, 102') ;
d) comparaison (104) entre les résultats de ladite au moins une analyse d'un cycle de l'ensemble du groupe motopropulseur et d'un composant réparé (102, 102') de la turbine à gaz et le résultat d'une analyse d'un cycle de l'ensemble du groupe motopropulseur avec des composants à l'état neuf (103) de la turbine à gaz ; et
e) en fonction du résultat de la comparaison (104) : réparation du composant (105) de la turbine à gaz selon la réparation sur laquelle était fondé le calcul du formage pour l'analyse d'un cycle (102, 102'), ou remplacement du composant de la turbine à gaz par un composant à l'état neuf (106).

2. Procédé selon la revendication 1, **caractérisé en ce que** dans le cas où il a été constaté qu'un composant (100) de la turbine à gaz n'était pas apte à être réparé, une analyse d'un cycle de l'ensemble d'un groupe motopropulseur avec le composant de la turbine à gaz est mise en oeuvre (107, 108) après une révision générale, le résultat de l'analyse d'un cycle de l'ensemble du groupe motopropulseur avec le composant (108) de la turbine à gaz ayant subi la révision générale est comparé aux résultats d'une analyse d'un cycle de l'ensemble d'un groupe motopropulseur avec des composants à l'état neuf (103) de la turbine à gaz, et en fonction du résultat de la comparaison, le composant de la turbine à gaz est soumis à une révision générale (110) ou est remplacé (106) par un composant à l'état neuf de la turbine à gaz.

3. Procédé selon l'une quelconque des revendications précédentes, **caractérisé en ce que** pour la comparaison des résultats des analyses d'un cycle, les paramètres pris en compte sont le rendement, la consommation de kérosène, les émissions polluantes, les coûts d'exploitation, les durées d'immobilisation, les coûts de réparation, les coûts de révision générale et/ou les coûts d'achat de produits neufs, les différents paramètres étant évalués de préférence.

4. Procédé selon l'une quelconque des revendications précédentes, **caractérisé en ce que** l'examen de la capacité de réparation (100) est effectué à l'appui de la mesure des composants de la turbine à gaz et de la comparaison entre les données de mesure et les directives du fabriquant.

5. Procédé selon l'une quelconque des revendications précédentes, **caractérisé en ce que** la réparation englobe le non-usinage et/ou l'usinage postérieur avec enlèvement de copeaux, de préférence par masquage.

6. Procédé selon l'une quelconque des revendications précédentes, **caractérisé en ce que** pendant l'analyse d'un cycle de l'ensemble d'un groupe motopropulseur, l'écoulement influencé par les composants de la turbine à gaz et/ou les déformations dues à la sollicitation des composants de la turbine à gaz sont pris en compte.

7. Procédé selon l'une quelconque des revendications précédentes, **caractérisé en ce que** le composant de la turbine à gaz est une aube de la turbine à gaz.
